# EUROPÄISCHE PATENTSCHRIFT

(11) **EP 0 746 485 B1**
(45) Veröffentlichungstag und Bekanntmachung des Hinweises auf die Patenterteilung: **01.03.2000**
(21) Anmeldenummer: 95936432.4
(22) Anmeldetag: 11.11.1995
(51) Int. Cl.: B60T 8/36, B60T 8/48, B60T 8/24, B60T 8/50, F16K 31/40

(54) **ELEKTROMAGNETISCH STEUERBARE VENTILANORDNUNG**
ELECTROMAGNETIC VALVE ARRANGEMENT
SYSTEME DE SOUPAPES A COMMANDE ELECTROMAGNETIQUE

(30) Priorität: 24.11.1994 DE 4441791; 09.09.1995 DE 19533400
(43) Veröffentlichungstag der Anmeldung: 11.12.1996
(73) Patentinhaber: ROBERT BOSCH GMBH, 70442 Stuttgart (DE)
(72) Erfinder: EITH, Hubert, D-71701 Schwieberdingen (DE); STAIB, Helmut, D-71701 Schwieberdingen (DE); FRIEDOW, Michael, D-71732 Tamm (DE); SCHEFFEL, Martin, D-71665 Vaihingen (DE); LANDER, Jürgen, D-70563 Stuttgart (DE); STOKMAIER, Gerhard, D-71706 Markgröningen (DE); SCHWARZ, Hans-Friedrich, D-75417 Mühlacker (DE)
(86) Internationale Anmeldenummer: DE9501561
(87) Internationale Veröffentlichungsnummer: WO9615926

(56) Entgegenhaltungen:
- EP-A- 0 403 144
- EP-A- 0 418 502
- DE-A- 2 820 911
- DE-A- 4 213 740
- DE-B- 1 168 725
- DE-C- 4 232 311
- GB-A- 1 138 017
- GB-A- 2 263 741
- US-A- 4 082 116

## Beschreibung

### Stand der Technik

Die Erfindung geht aus von einer elektromagnetisch steuerbaren Ventilanordnung nach der Gattung des Anspruchs 1. Durch die Druckschrift DE 42 13 740 A1 ist eine hydraulische Fahrzeugbremsanlage mit einer Blockierschutzeinrichtung bekannt, die weitergebildet ist zu einer Antriebsschlupfregeleinrichtung für vier Antriebsräder und für beschleunigtes Anlegen von Bremsbacken am Beginn eines Antriebsschlupfregelungsbetriebs. Bremsdruck für die Antriebsschlupfregelung liefern zur Blockierschutzeinrichtung gehörende selbstansaugende Rückförderpumpen, die sich durch elektromagnetisch öffenbare 2/2-Wegeventile, die relativ große Durchlaßquerschnitte aufweisen, aus einem Hauptbremszylinder Druckmittel ansaugen. Zum beschleunigten Anlegen der Bremsbacken sind zwei Hilfspumpen vorgesehen.

Durch die Druckschrift DE 42 32 311 C1 ist eine hydraulische Fahrzeugbremsanlage bekannt, die unter Verwendung einer Blockierschutzreinrichtung weitergebildet ist zur Seitenschlupfregelung von Fahrzeugrädern beim Durchfahren einer Kurve per automatisches Bremsen.

In der allgemeinen Hydraulik sind Ventilanordnungen bekannt, die aus einem Hauptventil und einem Hilfsventil, das zum hydraulischen Steuern des Hauptventils dient, bestehen.

Eine solche Ventilanordnung gemäß der Druckschrift DE 28 20 911 C2 besteht im wesentlichen aus einem Gehäuse, einem Hauptventil mit einem Hauptventilsitz und mit einem Hauptventilverschlußstück und einem Hilfsventil mit einem Hilfsventilsitz am Hauptverschlußstück und einem dieses durchziehenden und dabei vom Hilfsventilsitz ausgehenden Steuerdurchlaß und mit einem Hilfsverschlußstück sowie mit einer das Hilfsverschlußstück belastenden Feder, mit einem beweglichen Anker zum Wegbewegen des Hilfsverschlußstückes vom Hilfsventilsitz und damit dem Verschlußstück und mit einem weiteren beweglichen Element, das relativ zum Anker beweglich und magnetisch wirksam ist. Nachteilig bei dieser Ventilanordnung ist, daß sich zwischen dem Hauptverschlußstück und dem Gehäuse eine Membran erstreckt, die bei hydraulischer Belastung mit hohem Druck gefährdet ist, und daß beim Öffnen des Hauptventils das Hauptverschlußstück die Ankeranordnung, bestehend aus dem Anker und dem weiteren beweglichen Element, zu verschieben hat. Weil die Verschiebekraft aber abhängig ist von einem Druckunterschied zwischen beiden Seiten der Membran und weil ein solcher Druckunterschied beim Öffnen des Hauptventils kleiner wird, öffnet sich das Hauptventil langsam.

### Vorteile der Erfindung

Die erfindungsgemäße Ventilanordnung mit den kennzeichnenden Merkmalen des Anspruchs 1 hat den Vorteil, daß einerseits das Hilfsverschlußstück schnell beschleunigbar ist zum schnellen Erzeugen von hydraulischer Hilfskraft für das Öffnen des Hauptventils, und daß ab dem Öffnen des Hauptventils das Hauptverschlußstück von seinem Anker beschleunigbar ist insbesondere dann, wenn der Anker des Hilfsverschlußstückes bereits einen Hubweg zurückgelegt hat. Weil die erfindungsgemäße Ventilanordnung so ausgebildet ist, daß der längste Hubweg eines Ankers derjenige ist, der zum Öffnen des Hilfsventils bestimmt ist, kann der zugehörige Elektromagnet relativ klein und leicht ausgebildet werden und ist leicht unterbringbar innerhalb der Blockierschutzeinrichtung.

Durch die in den Unteransprüchen aufgeführten Maßnahmen sind vorteilhafte Weiterbildungen und Verbesserungen der im Hauptanspruch angegebenen Ventilanordnung möglich.

Die kennzeichnenden Merkmale des Anspruchs 15 ergeben eine vorteilhafte Kombination mit einer hydraulischen Fahrzeugbremsanlage, die einrichtbar ist zum automatischen Bremsen beispielsweise zum Zwecke von Seitenschlupfregelung von Fahrzeugrädern durch Bremsen und/oder zur Antriebsschlupfregelung an antreibbaren Rädern per automatischem Bremsen.

### Zeichnung

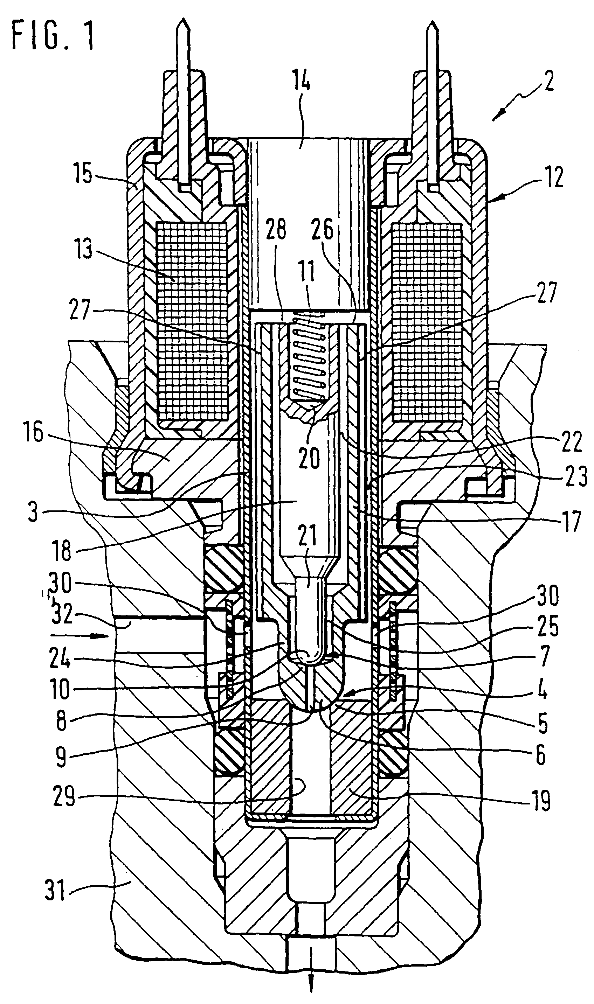

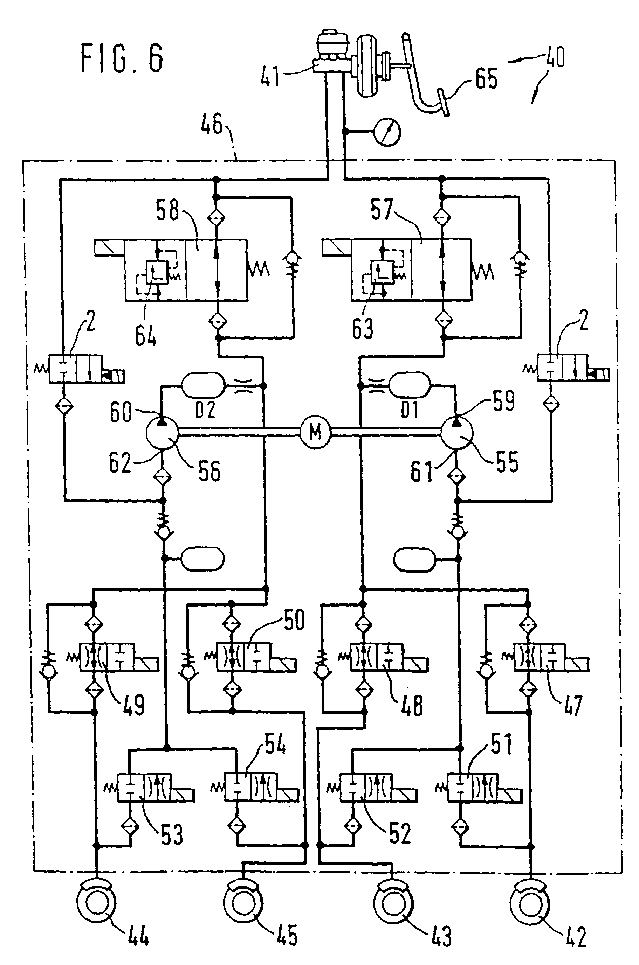

Zwei Beispiele und drei Ausführungsbeispiele der erfindungsgemäßen Ventilanordnung sowie eine hydraulische Fahrzeugbremsanlage mit der erfindungsgemäßen Ventilanordnung sind in der Zeichnung dargestellt und nachfolgend näher beschrieben. Es zeigen Figuren 1 bis 5 fünf Ventilanordnungen im Längsschnitt und Figur 6 den Schaltplan einer hydraulischen Fahrzeugbremsanlage, in die die erfindungsgemäße Ventilanordnung eingebaut ist.

### Beschreibung der Beispiele und Ausführungsbeispiele

Die Ventilanordnung 2 gemäß der Figur 1 hat ein Gehäuse 3, ein Hauptventil 4 mit einem Hauptventilsitz 5 und mit einem Hauptverschlußstück 6, ein Hilfsventil 7 mit einem Hilfsventilsitz 8, mit einem Steuerdurchlaß 9, mit einem Hilfsverschlußstück 10 und mit einer Feder 11 und einen Elektromagnet 12 mit einer Spule 13 mit einem relativ zur Spule 13 ruhenden Polkern 14, mit einem Magnetflußleitkörper 15 um die Spule 13 und mit einem an den Magnetflußleitkörper 15 sich anschließenden weiteren Magnetflußleitkörper 16, der zu dem Gehäuse 3 führt, mit einem Anker 17 und einem weiteren Anker 18.

Die Spule 13, der Polkern 14 sowie die Magnetflußleitkörper 15 und 16 und auch das Gehäuse 3 sind übernommen aus einem elektromagnetisch betätigbaren Ventil gemäß der Druckschrift GB 2 263 741 A. Erkennbar ist also die Erfindung auch darauf gerichtet, von bereits geschaffenen und bewährten Bauteilen Gebrauch zu machen. Daraus ergibt sich auch, daß die Erfindung darauf gerichtet ist, mit einer seither zur Verfügung stehenden Bauraumgröße auszukommen.

Der Hauptventilsitz 5 befindet sich vergleichbar mit dem genannten vorbekannten Ventil in einem Ventilsitzkörper 19, der in dem rohrartig ausgebildeten Gehäuse 3 gehalten ist. Am anderen Ende des rohrartigen Gehäuses 3 ist, wie beim Stand der Technik, der Polkern 14 hydraulisch dicht befestigt. Wie beim Stand der Technik, stützt sich die Feder 11 an dem Polkern 14 ab und erstreckt sich in eine Ausnehmung 20, die in den Anker 18 eingearbeitet ist. Der Anker 18 ist zylindrisch ausgebildet und mit einem Stößel 21 vereinigt, an den sich das Hilfsverschlußstück 10 anschließt. Beispielsweise können der Anker 18, der Stößel 21 sowie das Hilfsverschlußstück 10 einstückig ausgebildet sein durch Pressen in einem Gesenk.

Der Anker 18 hat einen Durchmesser, der kleiner ist als der Durchmesser des Polkerns 14. Der andere Anker 17 ist nach Art eines Rohres ausgebildet, so daß er unter Belassung eines radialen Abstandes 22, also eines Luftspaltes, den Anker 18 aufzunehmen vermag. Zwischen dem rohrartigen Anker 17 und dem Gehäuse 3 befindt sich ein weiterer radialer Abstand 23 für einen weiteren Luftspalt, wodurch der Anker 17 relativ zum Gehäuse 3 und der Anker 18 relativ zum Anker 17 beweglich ist.

An den im wesentlichen rohrartigen Anker 17 schließt sich ein rohrartiger Übergang 24 an, mit dem das Hauptverschlußstück 6 fest verbunden ist. Das Hauptverschlußstück 6, der rohrartige Übergang 24 und der rohrartige Anker 17 können ebenfalls durch Pressen einstückig hergestellt sein. Im rohrartigen Übergang 24 hin zum Stößel 21 befindet sich eine im wesentlichen ringartige Kammer 25, die zum Hilfsventilsitz 8 führt.

In dem Beispiel der Figur 1 weist der Anker 17 eine Ankerstirnfläche 26 auf, die ringartig ausgebildet ist und dem Polkern 14 gegenüberliegt. Von dieser ringartigen Ankerstirnfläche 26 gehen in Längsrichtung des Ankers 17 beispielsweise zwei Längsnuten 27 aus, die im Bereich des rohrartigen Übergangs 24 münden. Der Anker 18 weist ebenfalls eine Ankerstirnfläche 28 auf, die dem runden Querschnitt des Ankers 18 entsprechend und wegen der Ausnehmung 20 ebenfalls als eine Kreisringfläche ausgebildet ist. Wie in der Figur 1 ersichtlich ist, befindet sich die Ventilanordnung 2 in ihrer Grundstellung, d. h. daß das Hauptverschlußstück 6 auf dem Hauptventilsitz 5 aufsitzt und das Hilfsverschlußstück 10 auf dem Hilfsventilsitz 8 aufliegt infolge einer eingebauten Spannung der Feder 11, die deshalb eine Schließfeder ist. Im gezeichneten Zustand liegen die ringförmigen Ankerstirnflächen 26 und 28 in einer gemeinsamen Bezugsebene, die einen Abstand vom Polkern 14 hat. Dieser Abstand ist der konstruktiv vorgesehene Hub sowohl für den Anker 17 als auch den Anker 18. Dieser Abstand bestimmt dann auch den Hub des Hauptverschlußstückes 6 relativ zu seinem Hauptventilsitz 5. Es wird jedoch bemerkt, daß es keinen zwingenden Grund gibt, in der beschriebenen Weise beide Ankerstirnflächen 26 und 28 in eine für ihre Ausgangspositionen gemeinsame Bezugsebene zu legen.

Der Hauptventilsitz 5 öffnet sich in einen Auslaß 29, der aus dem Gehäuse 3 herausführt. In das Gehäuse 3 hinein führt wenigstens ein Einlaß 30 in Form wenigstens eines Loches in dem Gehäuse 3 vorzugsweise in Höhe des rohrartigen Übergangs 24 des äußeren Ankers 17.

### Funktion des ersten Beispiels

Wie bereits beschrieben, ist in der gezeichneten Grundstellung der Hauptventilsitz 5 und auch der Hilfsventilsitz 8 verschlossen. Infolgedessen kann durch einen Gehäuseblock 31, der beispielsweise Bestandteil einer Fahrzeugbremsanlage ist, durch einen Kanal 32 zum Einlaß 30 geleitetes Druckmittel zu einem Druckunterschied zwischen dem Einlaß 30 und dem Auslaß 29 führen. Bei Verwendung in der erwähnten Kraftfahrzeugbremsanlage kann der Druckunterschied Null sein, oder er kann beispielsweise durch Betätigung eines Bremspedals beispielsweise 130 bar erreichen oder übersteigen.

Wenn die Ventilanordnung 2 zu öffnen ist, damit weiteres Druckmittel in den Einlaß 30 einströmen und durch den Auslaß 29 abströmen kann, wird die Spule 13 mit elektrischem Strom versorgt, wodurch wenigstens der Anker 18 zum ruhenden Polkern 14 gezogen wird und dabei das Hilfsverschlußstück 10 bewegt. Ist eine zwischen dem Einlaß 30 und dem Auslaß 29 lastende Druckdifferenz sehr groß, dann wird sich der Anker 18 allein bewegen und dabei durch Abheben des Hilfsverschlußstücks 10 vom Hilfsventilsitz 8 den Steuerdurchlaß 9 öffnen. Dies hat innerhalb der ringartigen Kammer 25 und auch zwischen den Ankern 18 und 17 einen Druckabfall zur Folge gegenüber einem Druck, der um den rohrartigen Übergang 24 herum und in axialer Richtung auf den äußeren Anker 17 wirkt. Dieser Druck wirkt auf eine projizierte Kreisringfläche, die einerseits im wesentlichen vom äußeren Durchmesser des Ankers 17 und andererseits vom Durchmesser des Hauptventilsitzes 5 vorgegeben ist. Erkennbar steht der Anker 17 also unter einer hydraulischen Belastung, die zum Polkern 14 hin gerichtet ist und demzufolge den Anker 17 bewegen und dabei das Hauptverschlußstück 6 von dem Hauptventilsitz 5 abheben kann. Folglich ist mit einer durch das Hilfsventil 7 steuerbaren Druckveränderung das Hauptventil 4 öffenbar. Die zum Öffnen benötigte Kraft wird hierbei erkennbar von einem Druckgefälle zwischen dem Einlaß 30 und dem Auslaß 29 zur Verfügung gestellt.

Wenn durch Öffnen des Hauptventils 4 die zuvor vorhandene Druckdifferenz kleiner wird, so wird auch diejenige Kraft kleiner, die im Öffnungssinn des Hauptventils wirkt. In erfindungswesentlicher Weise kompensiert der Anker 17 ein Kleinerwerden von hydraulischer Öffnungskraft, weil dieser Anker 17, so wie der Anker 18, vom ruhenden Polkern 14 angezogen wird. Weil ab dem Einschalten des elektrischen Stromes zur Spule 13 gleichzeitig beide Anker 17 und 18 einer Anziehung durch das Polstück 14 unterliegen ist auch erkennbar, daß der Polkern 14 über den Anker 17 den Öffnungsvorgang des Hauptventils 4 unterstützt, also bezüglich des Öffnens beschleunigend wirken kann. Dies ergibt den Vorteil von kurzen Öffnungszeiten.

Wie bereits erwähnt, liegen bei in Ausgangsstellung befindlichen Ankern 17 und 18 deren Ankerstirnflächen 26 bzw. 28 in einer Ebene und der Abstand zum Polkern 14 ist relativ kurz verglichen mit einem Abstand eines Ankers gemäß der in der Beschreibungseinleitung genannten Druckschrift US 4, 082 116. Daraus ist auch erkennbar, daß der Elektromagnet 12 relativ klein ausbildbar ist.

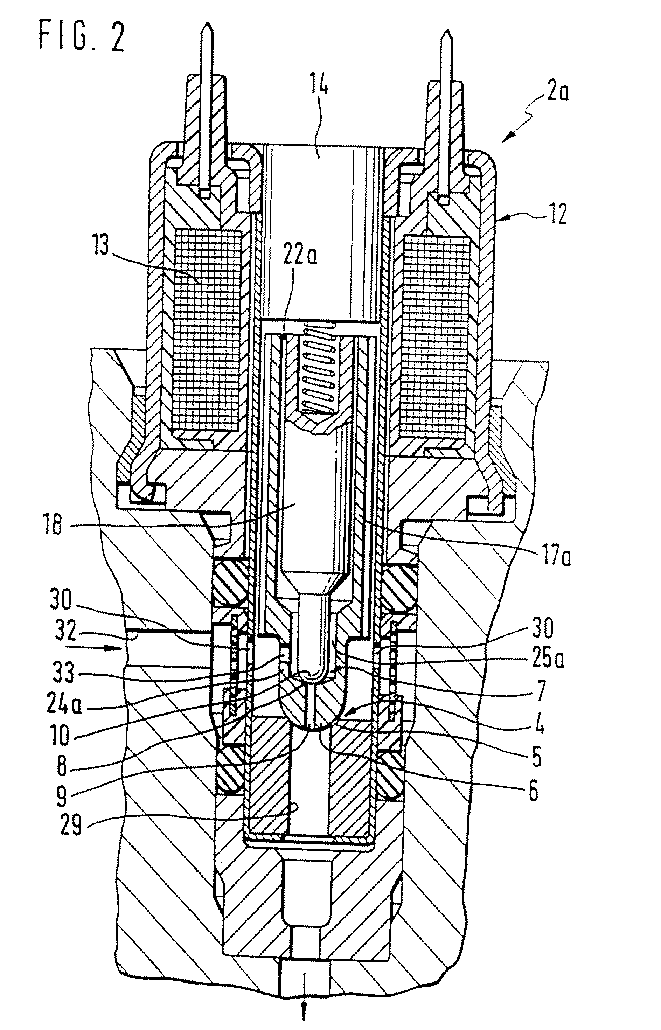

Die Ventilanordnung 2a gemäß der Figur 2 unterscheidet sich von Ventilanordnung 2 der Figur 1 im wesentlichen dadurch, daß ein radialer Abstand 22a zwischen dem äußeren Anker 17a und dem inneren Anker 18 kleiner gewählt ist als in der Ventilanordnung 2 gemäß der Figur 1. Ein weiterer Unterschied besteht darin, daß nunmehr eine in einem rohrartigen Übergang 24a befindliche Kammer 25a sich mit Druckmittel versorgen läßt durch wenigsten einen Kanal 33, der im wesentlichen in radialer Richtung die Wandung des rohrartigen Überganges 24a durchzieht. Beispielsweise ist nur ein Kanal 33 vorgesehen, dessen Durchmesser im wesentlichen einem Durchmesser des Steuerdurchlasses 9 entspricht, aber auch im Durchmesser größer oder kleiner sein kann. Aus den genannten Unterschieden ergibt sich, daß die Kammer 25a mit dem Einlaß 30 vorrangig durch den Kanal 33 und nachrangig durch einen Ringspalt gemäß dem radialen Abstand 22 a kommuniziert.

### Funktionsweise des zweiten Beispiels

Im geschlossenen Zustand der Ventilanordnung 2a lastet wiederum ein Druckgefälle, das zwischen dem Einlaß 30 und dem Auslaß 29 herrscht, sowohl auf dem Hilfsverschlußstück 10 als auch dem Hauptverschlußstück 6. Wird durch Einschalten eines elektrischen Stromes für die Spule 13 der Anker 18 zum Polkern 14 gezogen und dabei das Hilfsverschlußstück 10 vom Hilfsventilsitz 8 abgehoben, so sinkt innerhalb der Kammer 25a der ursprünglich vorhandene Druck ab infolge des Ausflusses von Druckmittel durch den Steuerdurchlaß 9 und gedrosselter Druckmittelzufuhr durch den Kanal 33. Folglich ist, wie im Ausführungsbeispiel der Figur 1, hydraulisch bedingt der Anker 17a einer verschiebenden Kraft, die in Richtung zum Polkern 14 wirkt, ausgesetzt, so daß er zum Polkern 14 bewegt wird und dabei das Hauptverschlußstück 6 vom Hauptventilsitz 5 abhebt. Hierbei wirkt, wie zum ersten Ausführungsbeispiel beschrieben, der Polkern 14 ziehend auf den Anker 17a, so daß ebenfalls der Öffnungsvorgang des Hauptventils 4 unterstützt und dadurch beschleunigt und verkürzt wird.

Das Flächenverhältnis zwischen dem Querschnitt des Hauptventilsitzes 5 und dem Querschnitt des Hilfsventilsitzes 8 ist vom Konstrukteur wählbar. Entsprechend dem größten zu erwartenden Druckgefälle zwischen dem Einlaß 30 und dem Auslaß 29 ist der Querschnitt des Ankers 17 des ersten Ausführungsbeispiels bzw. des Ankers 17a des zweiten Ausführungsbeipsiels so zu wählen, daß der betreffende Anker das Hilfsverschlußstück 10 von seinem Hilfsventilsitz 8 abzuheben vermag. Dann kann für den Anker 17 bzw. 17a ein radialer Abstand zwischen dem Anker 18 und dem Gehäuse 3 genutzt werden. Geht man andererseits von einer Querschnittswahl aus, wie sie in der Figur 2 dargestellt ist, so ergibt sich bei der dadurch mittels des Elektromagnets 12 und dem Anker 18 erzeugbaren Kraft der größtzulässige Querschnitt und damit Durchmesser des Hilfsventilsitzes 8.

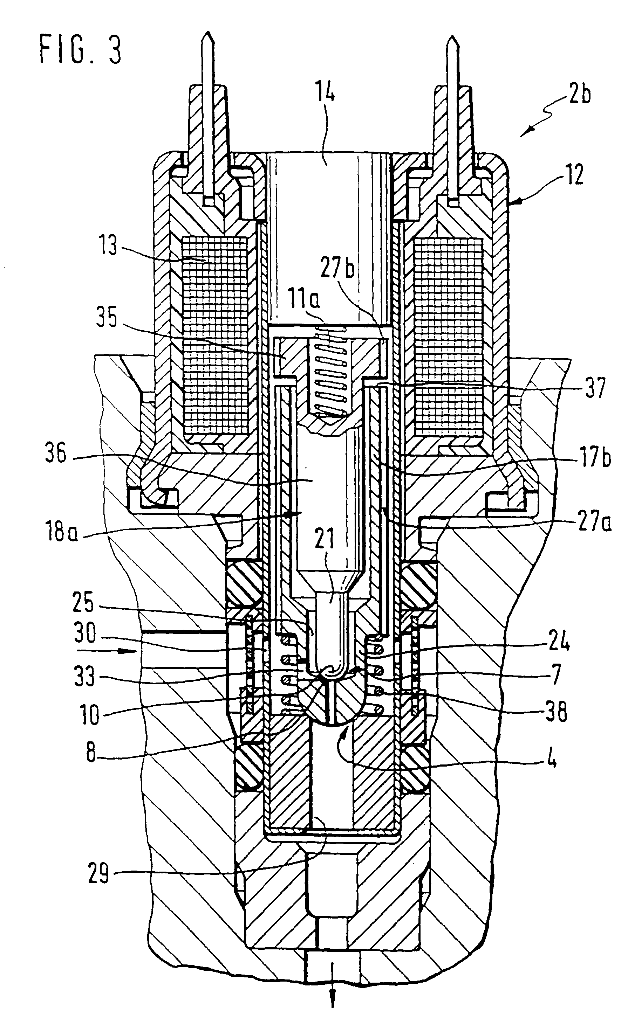

Das erste Ausführungsbeispiel der erfindungsgemäßen Ventilanordnung 2b gemäß der Figur 3 hat ebenfalls ein Hauptventil 4 und ein Hilfsventil 7. Ein dem Hilfsventil 7 zugeordneter Anker 18a hat beim Polkern 14 einen ersten Längenabschnitt 35 mit einem Durchmesser, der nahezu so groß ist wie der Durchmesser des Polkerns 14. In Richtung zu dem Hilfsverschlußstück 10 schließt sich an den ersten Längenabschnitt 35 ein zweiter Längenabschnitt 36 an. Der Durchmesser dieses Längenabschnittes 36 ist kleiner gewählt als der Durchmesser des Ankers 17a des Ausführungsbeispieles gemäß der Figur 2. An den zweiten Längenabschnitt 36 schließt sich ebenfalls ein Stößel 21 an, der am Hilfsverschlußstück 10 endet.

Ähnlich wie bei den Beispielen der Figur 1 und 2 ist um den Anker 18a herum ein im wesentlichen rohrartiger Anker 17b angeordnet. Dieser Anker 17b ist gegenüber den Ankern 17 und 17a der Ausführungsbeispiele gemäß den Figuren 1 und 2 kürzer ausgebildet, denn er endet unterhalb dem ersten Längenabschnitt 35 des Ankers 18a. In der gezeichneten Grundstellung der Ventilanordnung 2b sind das Hauptventil 4 und das Hilfsventil 7 geschlossen, und zwischen dem ersten Längenabschnitt 35 des Ankers 18a und einer oberen Stirnseite 37 des Ankers 17b verbleibt ein kleiner Abstand für einen Luftspalt. Der Anker 17b geht ebenfalls über in einen rohrartigen Übergang 24. Der rohrartige Übergang 24 ist wie im Beispiel gemäß der Figur 2 von wenigstens einem Kanal 33 durchzogen. Innerhalb des rohrartigen Übergangs 24 befindet sich, von dem Stößel 21 und dem Hilfsverschlußstück 10 begrenzt, wieder eine ringartige Kammer 25. Der Anker 17b kann ebenfalls wenigstens eine Längsnut 27a aufweisen. Entsprechend kann auch der erste Längenabschnitt 35 des Ankers 18a mit wenigstens einer Längsnut 27b versehen sein. Die Längsnut 27b verringert den Bewegungswiderstand des Ankers 18a, der von Druckmittel umgeben ist, und verringert dadurch die Öffnungszeit des Hilfsventils 7.

Wie bereits erwähnt, ist die in der Figur 3 dargestellte Stellung die Grundstellung, in der die Spule 13 stromlos ist. Wird zum Öffnen der Ventilanordnung 2b die Spule 13 mit elektrischem Strom beaufschlagt, so wird unter anderem der Polkern 14 durchflutet und auch vorrangig der erste Längenabschnitt 35 des Ankers 18 durchflutet. Infolgedessen hat der Anker 18a gegenüber den Ausführungsbeispielen der Figuren 1 und 2 eine größere Hubkraft zum Abheben des Hilfsverschlußstückes 10 von seinem Hilfsventilsitz 8. Demgemäß ist die Ventilanordnung 2b gut geeignet bei großem Druckgefälle zwischen seinem Einlaß 30 und seinem Auslaß 29. Nach dem Öffnen des Hilfsventilsitzes 8 wird infolge hydraulisch erzeugter Kräfte und auch infolge elektromagnetischer Kräfte, der Anker 17b bewegt, so daß sich das Hauptventil 4 öffnet. Weil, wie dies die Figur 3 andeutet, der Anker 17b weniger stark vom Polkern 14 angezogen wird, kann es zweckmäßig sein, dem Hauptventil 4 eine Öffnungsfeder 38 zuzuordnen. Damit trotz dieser Öffnungsfeder 38 die Ventilanordnung 2b sicher schließbar ist, ist eine Feder lla, die sich am Polkern 14 abstützt und gegen den Anker 18a wirkt, etwas kräftiger ausgebildet als in den Ausführungsbeispielen der Figuren 1 und 2. Die Anordnung der Öffnungsfeder 38 ist zweckmäßig, wenn ein Betrieb der Ventilanordnung 2b bei sehr zähflüssigem Druckmittel wie Bremsflüssigkeit erfolgt, so wie dies beispielsweise bei Temperaturen unter -20° C zu erwarten ist.

Ergänzend wird darauf hingewiesen, daß die Öffnungsfeder 38 auch in die Ausführungsbeispiele der Figuren 1 und 2 übertragen werden kann. Dementsprechend wären dann dort die Federn 11 gegen die stärkere Federn lla auszutauschen. Andererseits kann man aber auch im Ausführungsbeispiel der Figur 3 den wenigstens einen Kanal 33 weglassen und dafür zwischen den Ankern 17b und 18a wie im Beispiel gemäß der Figur 1 einen etwas vergrößerten radialen Abstand 22 vorsehen.

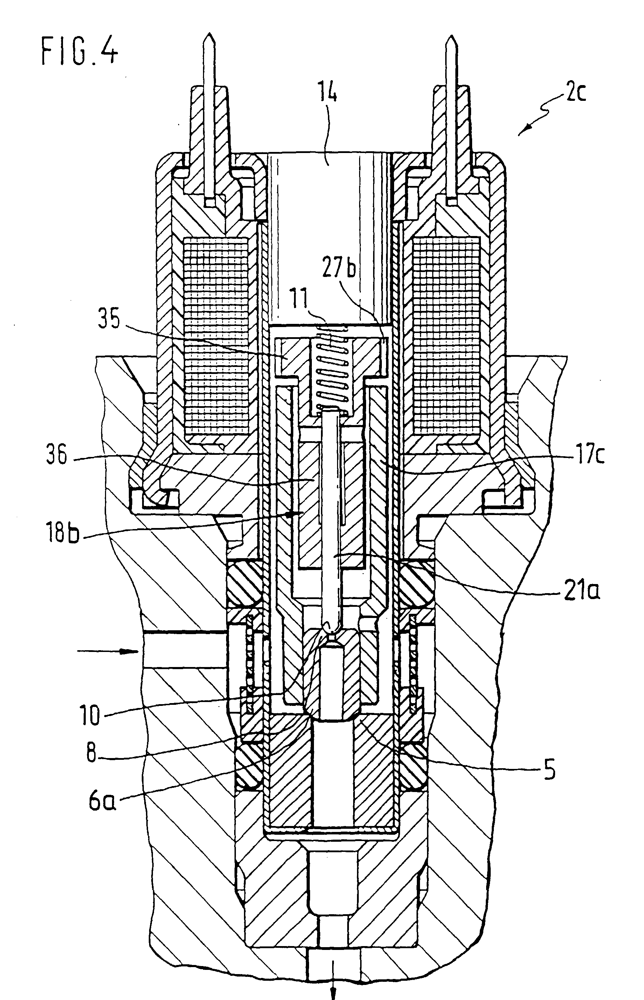

Bei dem in Figur 4 dargestellen zweiten Ausführungsbeispiel der erfindungsgemäßen Ventilanordnung 2c ist der Anker 18b des Hilfsverschlußstücks 10 ein gestuftes, zylindrisches Bauteil. Er weist einen ersten Längenabschnitt 35 auf, der dem Polkern 14 zugewandt und dessen Durchmesser nahezu so groß wie der Durchmesser des Polkerns 14 ist. An diesen ersten Längenabschnitt 35 schließt sich einstückig ein zweiter Längenabschnitt 36 kleineren Durchmessers an, der in einem Anker 17c für ein Hauptverschlußstück 6a aufgenommen und geführt ist. Der erste Längenabschnitt 35 weist mindestens eine Längsnut 27b an seine Umfang auf. Der Anker 18b des Hilfsverschlußstücks 10 besteht aus weichmagnetischem Werkstoff. Er weist eine Axialbohrung auf, in der die Feder 11 aufgenommen ist, welche den Anker 18b vom Polkern 14 abdrückt. Die Axialbohrung setzt sich mit kleinerm Durchmesser durch den Anker 18b hindurch fort. In sie ist ein Stößel 21a eingepreßt, der in Richtung des Hilfsventilsitzes 8 aus dem Anker 18b vorsteht und an seinem Ende halbkugelförmig als Hilfsverschlußstück 10 ausgebildet ist. Der Stößel 21a ist zumindest im Bereich des Hilfsverschlußstücks 10 gehärtet. Er kann auch auf andere Weise als durch Einpressen mit dem Anker 18b verbunden sein, beispielsweise durch Schweißen oder durch Einprägen des Ankers 18b an mindestens einer Stelle seines Umfangs in radialer Richtung.

Die zweistückige Ausbildung des Ankers 18b mit dem Stößel 21a und dem Hilfsverschlußstück 10 ist einfacher zu fertigen als ein einstückiger Anker und damit kostengünstiger.

Der Anker 17c des Hauptverschlußstücks 6a ist als Rohr ausgebildet, das sich in Richtung des Hauptverschlußstücks 6a nach Art einer Muffe im Durchmesser verjüngt. Das Hauptverschlußstück 6a ist ein zylindrisches Bauteil mit einer durchgehenden Axialbohrung. An seiner dem Hilfsverschlußstück 10 zugewandten Stirnseite ist ein konischer Hilfsventilsitz 8 ausgebildet. Die andere, dem Hauptventilsitz 5 zugewandte Stirnseite des Hauptverschlußstücks 6a ist kugelförmig ausgebildet. Das Hauptverschlußstück 6a ist in den Anker 17c eingepreßt, kann aber auch auf andere, ansich bekannte Weise mit dem Anker 17c verbunden sein. Es ist zumindest im Bereich des Hilfsventilsitzes 8 und seinem kugelförmigen, mit dem Hauptventilsitz 5 zusammenwirkenden Ende gehärtet. Der Anker 17c besteht aus weichmagnetischem Werkstoff. Diese zweiteilige Anker/Verschlußstück-Kombination läßt sich ebenfalls einfacher und damit kostengünstiger herstellen als ein einstückiger Anker.

Im übrigen stimmt die zweite Ventilanordnung 2c mit der ersten, in Figur 3 dargestellten Ausführunsform überein, wobei die Öffnungsfeder 38 weggelassen ist.

Als Ventilschließglied insbesondere des Hilfsventils 7, aber auch des Hauptventils 4, kann eine Kugel Verwendung finden, die beispielsweise in ansich bekannter Weise an der dem jeweiligen Ventilsitz 5, 8 zugewandten Stirnseite in den Anker 18, 17 eingepreßt ist (nicht dargestellt). Durch Verwendung einer Kugel als Verschlußstück, die als Massenfertigungsteil billig erhältlich ist, läßt sich ein Anker mit Verschlußstück einfach und kostengünstig herstellen.

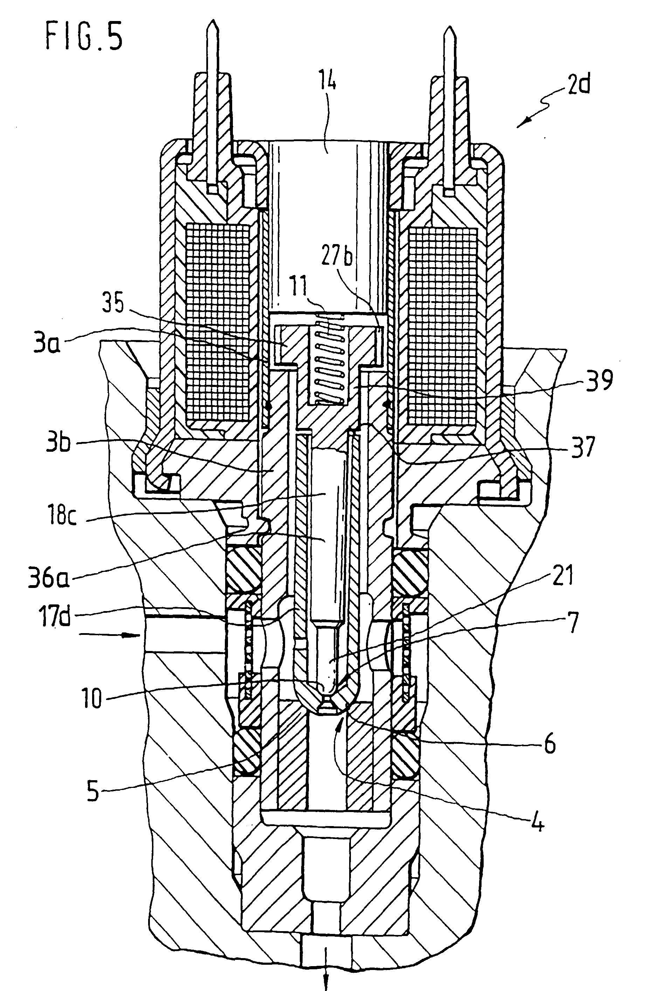

Bei der dritten, in Figur 5 dargestellten, erfindungsgemäßen Ventilanordnung 2d weist das Gehäuse einen kurzen Rohrabschnitt 3a auf, der wie das Gehäuse 3 der vorherigen Ausführungsformen der Erfindung dünnwandig und mit dem Polkern 14 hydraulisch dicht verbunden ist. Der Rohrabschnitt 3a setzt sich in ein dickwandiges Rohr 3b fort, mit dem er beispielsweise mittels einer umlaufenden Schweißung hydraulisch dicht verbunden ist. Der Innendurchmesser des Gehäuses 3a, 3b verjüngt sich dadurch an einem dem Polkern 14 zugewandten Stirnende des dickwandigen Rohrs 3b. Ein Anker 18c für das Hilfsverschlußstück 10 ist zweifach gestuft ausgebildet. Er weist einen ersten Längenabschnitt 35 auf, der dem Polkern 14 zugewandt ist und mindestens eine Längsnut 27b an seinem Umfang aufweist.

Mit einem kurzen Zwischenabschnitt 39 ragt der Anker 18c in das Rohr 3b und ist dort geführt. Ein weiterer Längenabschnitt 36a geht einstückig in einen Stößel 21 über, dessen freies Ende das halbkugelförmige Hilfsverschlußstück 10 bildet. Der weitere Längenabschnitt 36a ist in einem rohrartigen Anker 17d des Hauptverschlußstücks 6 aufgenommen und geführt.

Der rohrartige Anker 17d ist ähnlich dem im dritten Ausführungsbeispiel verwendeten Anker 17b ausgebildet, weist jedoch einen kleineren Außendurchmesser auf, der dem verjüngten Innendurchmesser des Rohrs 3b des Gehäuses angepaßt ist. Das dem Hauptventilsitz 5 zugewandte Stirnende des Ankers 17d ist halbkugelförmig als Hauptverschlußstück 6 ausgebildet. Bei dieser Ausgestaltung der Erfindung ist die Ankerstirnfläche 37 des Ankers 17d des Hauptverschlußstücks 6 verkleinert gegenüber der dritten Ventilanordnung 2b die Magnetkraft auf den Anker 18c des Hilfsverschlußstückes 10 ist dadurch größer, so daß sich die Betätigungskraft für das Hilfsventil 7 vergrößert und die Öffnungszeiten verkürzt. Da das Hauptventil 4, wie oben beschrieben, druckmittelunterstützt öffnet, genügt für diese eine verkleinerte Betätigungskraft. Der Magnetkreis der Ventilanordnung 2d ist also hinsichtlich der Betätigung des Hilfsventils 7 optimiert.

Die beschriebenen Ventilanordnungen 2b, 2c und 2d sind vorteilhaft anwendbar innerhalb einer hydraulischen Farzeugbremsanlage 40 gemäß der Figur 6. Diese hydraulische Fahrzeugbremsanlage 40 besitzt zwischen einem Hauptbremszylinder 41 und vier Radbremsen 42, 43, 44, 45 eine Blockierschutzeinrichtung 46 des sogenannten Rückfördertyps. Den Radbremsen 42, 43, 44, 45 sind Bremsdruckmodulationsventile 47, 48, 49, 50 und 51, 52, 53, 54 zugeordnet. Dabei sind die Bremsdruckmodulationsventile 47 bis 50 als normal offenstehende 2/2-Wegeventile ausgebildet und leiten Druckmittel, das aus dem Hauptbremszylinder 41 gedrückt wird, zu den Radbremsen 42, 43, 44, 45. Die Bremsdruckmodulationsventile 51, 52, 53, 54 sind in ihren normalen Stellungen geschlossen und als 2/2-Wegeventile ausgebildet. Diese Ventile dienen als Bremsdruckabsenkventile und werden bedarfsweise betätigt nach dem Schließen eines jeweils zugeordneten Bremsdruckmodulationsventils 47 bzw. 48 bzw. 49 bzw. 50. Die Bremsdruckmodulationsventile 51 bis 54 dienen also dazu, aus einer jeweiligen Radbremse 42, 43, 44, 45 Druckmittel abzulassen und einer jeweiligen Rückförderpumpe 55 bzw. 56 zuzuleiten. Jede Rückförderpumpe 55, 56 fördert das ihr zugeleitete Druckmittel unter Druckerhöhung vor die Bremsdruckmodulationsventile 47, 48 bzw. 49, 50 und im Falle des Stattfindes von Blockerischutzbetrieb auch zurück zum Hauptbremszylinder 41.

Die Blockierschutzeinrichtung ist zum automatischen Bremsen weitergebildet durch Einbau von Umschaltventilen 57 und 58 zwischen den Hauptbremszylinder 41 und die Bremsdruckmodulationsventile 47, 48 , 49, 50 sowie die Auslässe 59 bzw. 60 der Rückförderpumen 55 bzw. 56. Des weiteren sind zwischen Einlässe 61 bzw. 62 der Rückförderpumpen 55 bzw. 56 und den Hauptbremszylinder 41 je eine Ventilanordnung 2, 2a oder 2b der beschriebenen Art eingebaut. Dabei sind die Umschaltventile 57 und 58 mit Sicherheitsventilen 63 und 64 kombiniert. Infolge der Anordnung der Umschaltventile 57, 58, der Sicherheitsventile 63, 64 wird also automatisches Bremsen möglich, ohne daß ein Fahrer ein dem Hauptbremszylinder 41 zugeordnetes Bremspedal 65 zu betätigen hat. Wie bereits eingangs erwähnt, kann das automatische Bremsen beispielsweise vorgenommen werden zur Seitenschlupfregelung von Fahrzeugrädern zu dem Zweck, daß durch automatisches Bremsen seitlicher Radschlupf vergrößert wird, um dem unerwünscht großen Radschlupf des vor ihm oder hinter ihm sich bewegenden Fahrzeugrades zumindest angenähert zu werden zur Verminderung von Schleuderneigung oder zur Beendigung eines Schleudervorganges. Des weiteren ist diese weitergebildete Blockierschutzeinrichtung 46 natürlich auch, wie bereits in der Beschreibungseinleitung erwähnt, dazu geeignet, unerwünscht hohen Antriebsschlupf bei angetriebenen Rädern durch automatisches Bremsen auf kleinere Schlupfwerte zu regeln.

Ergänzend wird darauf hingewiesen, daß die erfindungsgemäßen Ventilanordnungen 2b, 2c und 2d auch in anderen als der in der Figur 4 dargestellten Fahrzeugbremsanlage 40 mit Vorteil anwendbar sind. Weil Blockierschutzeinrichtungen, Antriebsschlupfregeleinrichtungen und Ausgestaltungen für die Seitenschlupfregelung bereits zum Stand der Technik gehören, braucht hier nicht in alle Einzelheiten beim Betrieb eingegangen zu werden. Es wird deshalb lediglich beschrieben, daß dann, wenn das Bremspedal 65 nicht betätigt ist, die jeweils verwendete der Ventilanordnungen 2, 2a, 2b, 2c oder 2d schnell öffenbar ist, da zwischen dem Hauptbremszylinder 41 und dem jeweiligen Einlaß 61 bzw. 62 der Rückförderpumpen 55 bzw. 56 praktisch kein das Öffnen behinderndes Druckgefälle vorhanden ist. In solchen Fällen werden die Elektromagnete 12 beide Anker 17, 18 bzw. 17a, 17b und 18a gleichzeitig bewegen, wodurch sehr schnell der Hauptventilsitz 5 geöffnet wird und sich die Rückförderpumpen 55 und 56, die als selbst ansaugende Pumpen ausgebildet sind, sich gut füllen und dementsprechend schnell Druckanstiege an ihren Auslässen 59 bzw. 60 erzeugen können.

Sollte bei gedrücktem Bremspedal 65, wodurch vor den Ventilanordnungen 2 ein Bremsdruck lastet, ein Seitenschlupfregelungsbetrieb erforderlich sein, dann wird der jeweilige Elektromagnet 12 zunächst nur den Anker 18 bzw. 18a des jeweiligen Hilfsventils 7 anziehen und dieses Hilfsventil 7 öffnen, wonach dann in der bereits beschriebenen Weise durch hydraulische Wirkung und aber auch mit Unterstützung des jeweiligen Elektromagnets 12 das jeweilige Hauptventil 4 geöffnet wird. Ab dem Öffnen des jeweiligen Hauptventils 4 steht dann wiederum der ganze Querschnitt des jeweiligen Hauptventils 4 zur Versorgung der jeweiligen selbst ansaugenden Rückförderpumpe 55 bzw. 56 zur Verfügung.

Da, wie bereits erwähnt, Blockierschutzeinrichtungen und deren Weiterbildungen im Stand der Technik vorhanden sind und weil es bereits unterschiedliche Ausführungsarten gibt, wird hier nur allgemein darauf hingewieen, daß die erfindungsgemäßen Ventilanordnungen 2b, 2c und 2d auch in anderen als der hier nur kurz beschriebenen hydraulischen Fahrzeugbremsanlage 40 verwendbar sind.

## Patentansprüche

1. Ventilanordnung (2b, 2c, 2d) bestehend aus einem Gehäuse, einem Hauptventil (4), mit einem Hauptventilsitz (5) und mit einem Hauptventilverschlußstück (6, 6a) und aus einem Hilfsventil (7) mit einem Hilfsventilsitz (8) am Hauptverschlußstück (6, 6a) und einem dieses durchziehenden, vom Hilfsventilsitz (5) ausgehenden Steuerdurchlaß (9), mit einem Hilfsverschlußstück (10), mit einer das Hilfsverschlußstück (10) belasteten Feder (11), mit einem beweglichen Anker (18a, 18b, 18c) zum Wegbewegen des Hilfsverschlußstückes (10) vom Hilfsventilsitz (8), mit einem Elektromagnet (12) für den Anker (18a, 18b, 18c) und mit einem weiteren beweglichen Element (17b, 17c, 17d), das relativ zum Anker (18a, 18b, 18c) des Hilfsverschlußstückes (10) beweglich und magnetisch wirksam ist, wobei das bewegliche, magnetisch wirksame Element als ein zweiter Anker (17b, 17c, 17d) ausgebildet ist, der den Anker (18a, 18b, 18c) des Hilfsverschlußstückes (10) wenigstens auf einem Teil von dessen Länge umgibt und starr mit dem Hauptverschlußstück (6) verbunden ist, und wobei beiden Ankern (17b, 17c, 17d, 18a, 18b, 18c) gemeinsam ein unbeweglich im Elektromagnet (12) angeordneter Polkern (14) zugeordnet ist, **dadurch gekennzeichnet,** daß der Anker (18a) des Hilfsverschlußstückes (10) beim Polkern (14) einen Längenabschnitt (35) mit einem Durchmesser von im wesentlichen dem Durchmesser des Polkerns (14) und an den ersten Längenabschnitt (35) anschließend einen zweiten Längenabschnitt (36) mit einem kleineren Durchmesser aufweist, und daß bei geschlossenem Hilfsventil (7) der im wesentlichen rohrartig ausgebildete Anker (17b) des Hauptverschlußstückes (6) mit einer Stirnseite (37) einen axialen Mindestabstand vom ersten Längenabschnitt (35) des Ankers (18a) des Hilfsverschlußstückes (10) hat.

2. Ventilanordnung anch Anspruch 1, **dadurch gekennzeichnet,** daß in den äußeren Umfang des ersten Längenabschnitts (35) des Ankers (18a) des Hilfsverschlußstücks (10) eine Längsnut (27b) eingearbeitet ist.

3. Ventilanordnung nach Anspruch 1 oder 2, **dadurch gekennzeichnet,** daß das Hauptverschlußstück (6) und sein Anker (17, 17a, 17b) über einen rohrartigen Übergang (24) miteinander verbunden sind, daß der Übergang (24) hydraulisch dicht ausgebildet ist, und daß ein zwischen den beiden Ankern (17, 17a, 17b, 18, 18a) befindlicher Spalt einen in den rohrartigen Übergang (24) führenden Strömungskanal bildet.

4. Ventilanordnung nach Anspruch 1 oder 2, **dadurch gekennzeichnet,** daß das Hauptverschlußstück (6) und sein Anker (17a, 17b) über einen rohrartigen Übergang (24) miteinander verbunden sind, und daß der rohrartige Übergang (24) von wenigstens einem Kanal (33) durchzogen ist.

5. Ventilanordnung nach Anspruch 4, **dadurch gekennzeichnet,** daß der eine Kanal (33) einen Durchmesser von wenigstens dem Durchmesser des sich an den Hilfsventilsitz (8) anschließenden Steuerkanals (9) hat.

6. Ventilanordnung nach einem der Ansprüche 1 bis 4, **dadurch gekennzeichnet,** daß eine zweite Feder (38) eingebaut ist die als eine Öffnungsfeder für das Hauptversschlußstück (6) und schwächer als die erste Feder (11), die eine Schließfeder ist, ausgebildet ist.

7. Ventilanordnung nach Anspruch 1, **dadurch gekennzeichnet,** daß am äußeren Umfang des ersten Längenabschnitts (35) des Ankers (18a) des Hilfsverschlußstückes (10) wenigstens eine Längsnut (27a) eingearbeitet ist.

8. Ventilanordnung nach einem der vorhergehenden Ansprüche, **dadurch gekennzeichnet**, daß der Anker (18b) des Hilfsverschlußstücks (10) ein zylindrisches Bauteil mit einer axialen Bohrung ist, in der ein Zylinderstift als Stößel (21a) aufgenommen ist, der in Richtung des Hilfsventilsitzes (8) aus dem Anker (18b) vorsteht und dessen dem Hilfsventilsitz (8) zugewandtes Ende als Hilfsverschlußstück (10) ausgebildet ist.

9. Ventilanordnung nach Anspruch 8, **dadurch gekennzeichnet,** daß der Anker (18b) des Hilfsverschlußstücks (10) gestuft ausgebildet ist und auf einem verjüngten Längenabschnitt (36) in dem im wesentlichen rohrartig ausgebildeten Anker (17c) des Hauptverschlußstücks (6a) aufgenommen ist.

10. Ventilanordnung nach einem der vorhergehenden Ansprüche, **dadurch gekennzeichnet,** daß das Hilfsverschlußstück und/oder das Hauptverschlußstück eine Kugel ist.

11. Ventilanordnung nach einem der vorhergehenden Ansprüche, **dadurch gekennzeichnet,** daß der Anker (17c) des Hauptverschlußstücks (6a) ein Rohr ist, in dessen dem Hauptventilsitz (5) zugewandten Ende das Hauptverschlußstück (6a) fest aufgenommen ist.

12. Ventilanordnung nach Anspruch 11, **dadurch gekennzeichnet,** daß das Hauptverschlußstück (6a) ein axial durchbohrtes, zylindrisches Teil ist, dessen dem Hilfsverschlußstück (10) zugewandte Stirnseite als Hilfsventil (8) ausgebildet ist.

13. Ventilanordnung nach einem der Ansprüche 8 bis 12, **dadurch gekennzeichnet,** daß der Anker (17c, 18b) aus einem weichmagnetischen Werkstoff, und daß das Verschlußstück (6a, 10) aus einem harten Material besteht oder zumindest partiell gehärtet ist.

14. Ventilanordnung nach einem der vorhergehenden Ansprüche, **dadurch gekennzeichnet,** daß der Durchmesser des Ankers (17d) des Hauptverschlußstückes (6) kleiner als der Durchmesser des Polkerns (14) ist.

15. Hydraulische Fahrzeugbremsanlage (40) mit einem Hauptbremszylinder (41), mit Radbremsen (42, 43, 44, 45) mit Bremsdruckmodulationsventilen (47, 48, 49, 50, 51, 52, 53, 54) und mit wenigstens einer sich durch die Ventilanordnung (2, 2a, 2b) versorgenden selbst ansaugenden Rückförderpumpe (55, 56), in Kombination mit einer Ventilanordnung nach einem der Ansprüche 1 bis 14.

## Claims

1. Valve arrangement (2b, 2c, 2d), consisting of a housing, a main valve (4) having a main valve seat (5) and having a main valve closure part (6, 6a), and of an auxiliary valve (7) having an auxiliary valve seat (8) on the main closure part (6, 6a) and a control passage (9) which passes through said main closure part and starts from the auxiliary valve seat (5), having an auxiliary closure part (10), having a spring (11) which stresses the auxiliary closure part (10), having a movable armature (18a, 18b, 18c) for moving the auxiliary closure part (10) away from the auxiliary valve seat (8), having an electromagnet (12) for the armature (18a, 18b, 18c), and having a further movable element (17b, 17c, 17d) which is movable relative to the armature (18a, 18b, 18c) of the auxiliary closure part (10) and is magnetically effective, the movable, magnetically effective element being designed as a second armature (17b, 17c, 17d) which surrounds the armature (18a, 18b, 18c) of the auxiliary closure part (10) at least over part of its length and is rigidly connected to the main closure part (6), and the two armatures (17b, 17c, 17d, 18a, 18b, 18c) being jointly assigned a pole core (14) which is arranged immovably in the electromagnetic (12), characterized in that at the pole core (14) the armature (18a) of the auxiliary closure part (10) has a longitudinal section (35) having a diameter essentially corresponding to the diameter of the pole core (14), and adjoining the first longitudinal section (35) has a second longitudinal section (36) having a smaller diameter, and in that when the auxiliary valve (7) is closed, an end side (37) of the essentially tubular armature (17b) of the main closure part (6) is at an axial minimum distance from the first longitudinal section (35) of the armature (18a) of the auxiliary closure part (10).

2. Valve arrangement according to Claim 1, characterized in that a longitudinal groove (27b) is incorporated into the outer circumference of the first longitudinal section (35) of the armature (18a) of the auxiliary closure part (10).

3. Valve arrangement according to Claim 1 or 2, characterized in that the main closure part (6) and its armature (17, 17a, 17b) are connected to each other via a tubular transition (24), in that the transition (24) is designed such that it is hydraulically impervious, and in that a gap situated between the two armatures (17, 17a, 17b, 18, 18a) forms a flow channel leading into the tubular transition (24).

4. Valve arrangement according to Claim 1 or 2, characterized in that the main closure part (6) and its armature (17a, 17b) are connected to each other via a tubular transition (24), and in that the tubular transition (24) has at least one channel (33) passing through it.

5. Valve arrangement according to Claim 4, characterized in that the one channel (33) has a diameter of at least the diameter of the control channel (9) which adjoins the auxiliary valve seat (8).

6. Valve arrangement according to one of Claims 1 to 4, characterized in that a second spring (38) is fitted which is designed as an opening spring for the main closure part (6) and such that it is weaker than the first spring (11) which is a closing spring.

7. Valve arrangement according to Claim 1, characterized in that at least one longitudinal groove (27a) is incorporated on the outer circumference of the first longitudinal section (35) of the armature (18a) of the auxiliary closure part (10).

8. Valve arrangement according to one of the preceding claims, characterized in that the armature (18b) of the auxiliary closure part (10) is a cylindrical component having an axial bore in which a cylindrical pin is accommodated as a tappet (21a) which protrudes out of the armature (18b) in the direction of the auxiliary valve seat (8) and whose end which faces the auxiliary valve seat (8) is designed as the auxiliary closure part (10).

9. Valve arrangement according to Claim 8, characterized in that the armature (18b) of the auxiliary closure part (10) is of stepped design and is accommodated on a tapered longitudinal section (36) in the essentially tubular armature (17c) of the main closure part (6a).

10. Valve arrangement according to one of the preceding claims, characterized in that the auxiliary closure part and/or the main closure part is a ball.

11. Valve arrangement according to one of the preceding claims, characterized in that the armature (17c) of the main closure part (6a) is a tube in whose end which faces the main valve seat (5) the main closure part (6a) is accommodated in a fixed manner.

12. Valve arrangement according to Claim 11, characterized in that the main closure part (6a) is an axially pierced, cylindrical part whose end side which faces the main closure part (10) is designed as the auxiliary valve seat (8).

13. Valve arrangement according to one of Claims 8 to 12, characterized in that the armature (17c, 18b) consists of a soft magnetic material, and in that the closure part (6a, 10) consists of a hard material or is at least partially hardened.

14. Valve arrangement according to one of the preceding claims, characterized in that the diameter of the armature (17d) of the main closure part (6) is smaller than the diameter of the pole core (14).

15. Hydraulic vehicle braking system (40) having a main brake cylinder (41), having wheel brakes (42, 43, 44, 45) with brake-pressure modulation valves (47, 48, 49, 50, 51, 52, 53, 54), and having at least one self-priming return pump (55, 56), which is supplied by the valve arrangement (2, 2a, 2b), in combination with a valve arrangement according to one of Claims 1 to 14.

## Revendications

1. Système de soupapes (2b, 2c, 2d) composé d'un boîtier, d'une soupape principale (4) avec un siège de soupape principale (5) et une pièce d'obturation de soupape principale (6, 6a), ainsi que d'une soupape auxiliaire (7) avec un siège de soupape auxiliaire (8) sur la pièce d'obturation principale (6, 6a), ainsi qu'un passage de commande (9) traversant cette pièce à partir du siège de soupape auxiliaire (5), une pièce d'obturation auxiliaire (10), un ressort (11) chargeant cette pièce d'obturation auxiliaire (10), un induit mobile (18a, 18b, 18c) pour déplacer la pièce d'obturation auxiliaire (10) par rapport au siège de soupape auxiliaire (8), un électro-aimant (12) pour l'induit (18a, 18b, 18c) et un autre élément mobile (17b, 17c, 17d) mobile par rapport à l'induit (18a, 18b, 18c) de la pièce d'obturation auxiliaire (10) et agissant magnétiquement, dans lequel
• l'élément mobile à action magnétique est réalisé comme second induit (17b, 17c, 17d) que l'induit (18a, 18b, 18c) de la pièce d'obturation auxiliaire (10) entoure au moins sur une partie de sa longueur, et est relié rigidement à la pièce d'obturation principale (6),
• et les deux induits (17b, 17c, 17d, 18a, 18b, 18c) correspondent en commun à un noyau polaire (14) monté fixe dans l'électro-aimant (12),
caractérisé en ce que
• l'induit (18a) de la pièce d'obturation auxiliaire (10) présente, au niveau du noyau polaire (14), un segment de longueur (35) de diamètre correspondant pour l'essentiel à celui du noyau polaire (14) et au premier segment de longueur (35) adjacent, avec un second segment de longueur (36) de diamètre plus petit, et
• lorsque la soupape auxiliaire (7) est fermée, l'induit (17b), réalisé essentiellement sous forme tubulaire de la pièce d'obturation principale (6), présente, avec sa face frontale (37), une distance axiale minimale par rapport au premier segment de longueur (35) de l'induit (18a) de la pièce d'obturation auxiliaire (10).

2. Système de soupapes selon la revendication 1,
caractérisé en ce que
dans la périphérie extérieure du premier segment de longueur (35) de l'induit (18a) de la pièce d'obturation auxiliaire (18), il y a une rainure longitudinale (27b), usinée.

3. Système de soupapes selon l'une des revendications 1 ou 2,
caractérisé en ce que
• la pièce d'obturation principale (6) et son induit (17, 17a, 17b) sont reliés par une jonction tubulaire (24),
• cette jonction (24) étant étanche hydrauliquement, et
• un intervalle, qui se trouve entre les deux induits (17, 17a, 17b, 18, 18a), forme un canal d'écoulement conduisant dans la jonction tubulaire (24).

4. Système de soupapes selon l'une des revendications 1 ou 2,
caractérisé en ce que
• la pièce d'obturation principale (6) et son induit (17a, 17b) sont reliés par une jonction tubulaire (24), et
• la jonction tubulaire (24) est traversée par au moins un canal (33).

5. Système de soupapes selon la revendication 4,
caractérisé en ce que
le canal (33) a un diamètre au moins égal au diamètre du canal de commande (9) adjacent au siège de soupape auxiliaire (8).

6. Système de soupapes selon l'une des revendications 1 à 4,
caractérisé par
un second ressort (38) monté pour servir de ressort d'ouverture à la pièce d'obturation principale (6), et qui est plus faible que le premier ressort (11), ce dernier étant un ressort d'obturation.

7. Système de soupapes selon la revendication 1,
caractérisé en ce qu'
à la périphérie extérieure du premier segment longitudinal (35) de l'induit (18a) de la pièce d'obturation auxiliaire (10), on a usiné au moins une rainure longitudinale (27a).

8. Système de soupapes selon l'une quelconque des revendications précédentes,
caractérisé en ce que
l'induit (18b) de la pièce d'obturation auxiliaire (10) est une pièce cylindrique ayant un perçage axial recevant une broche cylindrique comme poussoir (21a) qui dépasse de l'induit (18b) dans la direction du siège de soupape auxiliaire (8) et dont l'extrémité tournée vers le siège de soupape auxiliaire (8) est réalisée comme pièce d'obturation auxiliaire (10).

9. Système de soupapes selon la revendication 8,
caractérisé en ce que
l'induit (18b) de la pièce d'obturation auxiliaire (10) est de forme étagée et son segment longitudinal rétréci (36) est logé dans un induit (17c) de forme essentiellement tubulaire de la pièce d'obturation principale (6a).

10. Système de soupapes selon l'une des revendications précédentes,
caractérisé en ce que
la pièce d'obturation auxiliaire et/ou la pièce d'obturation principale est une bille.

11. Système de soupapes selon l'une des revendications précédentes,
caractérisé en ce que
l'induit (17c) de la pièce d'obturation principale (6a) est un tube dont l'extrémité tournée vers le siège de soupape principale (5) reçoit solidairement la pièce d'obturation principale (6a).

12. Système de soupapes selon la revendication 11,
caractérisé en ce que
la pièce d'obturation principale (6a) est une pièce cylindrique percée axialement, dont la face frontale tournée vers la pièce d'obturation auxiliaire (10) est en forme de soupape auxiliaire (8).

13. Système de soupapes selon l'une des revendications 8 à 12,
caractérisé en ce que
l'induit (17c, 18b) est en un matériau à aimantation douce et la pièce d'obturation (6a, 10) est en une matière dure ou au moins une matière partiellement traitée.

14. Système de soupapes selon l'une quelconque des revendications précédentes,
caractérisé en ce que
le diamètre de l'induit (17d) de la pièce d'obturation principale (6) est inférieur au diamètre du noyau polaire (14).

15. Installation de frein hydraulique de véhicule (40) comprenant
un maître-cylindre de frein (41), des freins de roue (42, 43, 44, 45) avec des soupapes de modulation de pression de frein (47, 48, 49, 50, 51, 52, 53, 54) et au moins une pompe de refoulement auto-aspirante (55, 56) alimentée à partir du système de soupapes (2, 2a, 2b), en combinaison avec un système de soupapes selon l'une des revendications 1 à 14.
